Europäisches Patentamt

(19) European Patent Office

Office européen des brevets

(11) **EP 0 762 252 B1**

(12) **FASCICULE DE BREVET EUROPEEN**

(45) Date de publication et mention
de la délivrance du brevet:
**17.05.2000 Bulletin 2000/20**

(51) Int Cl.⁷: **G05D 1/02**

(21) Numéro de dépôt: **96401649.7**

(22) Date de dépôt: **24.07.1996**

(54) **Procédé et dispositif de guidage d'un mobile**

Verfahren und Vorrichtung zur Führung eines mobilen Objektes

Process and device for guidance of a mobile object

(84) Etats contractants désignés:
**DE GB**

(30) Priorité: **10.08.1995 FR 9509715**

(43) Date de publication de la demande:
**12.03.1997 Bulletin 1997/11**

(73) Titulaire: **AEROSPATIALE MATRA**
**75016 Paris (FR)**

(72) Inventeurs:
• **Peyrucain, Eric**
**31400 Toulouse (FR)**

• **Saint Upery, Yves**
**31300 Toulouse (FR)**

(74) Mandataire: **Bonnetat, Christian**
**CABINET BONNETAT**
**29, rue de St. Pétersbourg**
**75008 Paris (FR)**

(56) Documents cités:
**EP-A- 0 036 771      GB-A- 1 133 658**
**US-A- 3 994 456      US-A- 5 023 796**

**Description**

L'invention concerne un procédé de guidage d'un mobile dans un plan horizontal le long d'une trajectoire prédéfinie.

Bien que non exclusivement, la présente invention est particulièrement bien adaptée au guidage d'un aéronef, par exemple un avion de transport.

Dans le cadre de la présente invention, ladite trajectoire prédéfinie est formée de segments adjacents dits rectilignes (à savoir des segments d'orthodromie ou de loxodromie) ou en arcs de cercle et elle représente une trajectoire qui correspond par exemple à un plan de vol.

Le guidage d'un mobile le long d'une telle trajectoire suppose, si le mobile ne se trouve pas sur ladite trajectoire au début du guidage, la mise en oeuvre d'une opération de conduite destinée à amener ledit mobile sur ladite trajectoire. Une telle opération de conduite correspond, dans le cadre de la présente invention, à la capture de la trajectoire par le mobile, tandis que l'on appelle suivi le guidage proprement dit du mobile le long d'une trajectoire préalablement capturée.

De façon connue, lesdites opérations de capture et de suivi sont effectuées généralement en mettant en oeuvre des méthodes différentes pour le calcul des ordres de guidage. En outre, lesdits ordres de guidage sont le plus souvent déterminés de façon différente selon que le segment pris en compte sur ladite trajectoire correspond à un segment rectiligne, voir par exemple EP-A-0 036 771, ou à un arc de cercle, voir par exemple US-A-3 994 456.

Par conséquent, le guidage d'un mobile le long d'une trajectoire prédéfinie, effectué selon la méthode usuelle précitée, est particulièrement complexe. De plus, ce guidage est peu précis et il est souvent mis en oeuvre, en particulier dans le cas d'un aéronef, au moyen de manoeuvres brusques et notamment avec une inclinaison importante de l'aéronef, ce qui entraîne de l'inconfort, en particulier pour les passagers, et la génération de contraintes importantes sur ledit aéronef.

Par le document EP-0 036 771, on connaît un dispositif de commande d'un aéronef, permettant de faire exécuter audit aéronef une manoeuvre de capture d'une trajectoire prédéterminée. Cette manoeuvre de capture est réalisée selon une courbe de transition de type exponentiel. Pour ce faire, ce document antérieur enseigne de calculer et d'appliquer à l'aéronef un signal de commande d'assiette latérale $\Phi c$ qui est égale à la somme :

- d'un signal de commande $Y + R\dot{Y}$ représentatif de la courbe de transition exponentielle et tenant compte, notamment, de la distance $Y$ entre l'aéronef et la position orthogonale dudit aéronef sur la trajectoire à capturer ; et
- d'un signal d'assiette latérale prévisionnel $\Phi p$ pour maintenir l'aéronef sur ladite courbe de transition exponentielle et tenant compte, notamment, de l'angle TAE entre la direction de déplacement de l'aéronef et la direction qu'il présenterait s'il se trouvait sur la trajectoire à capturer.

La présente invention a pour objet de remédier aux inconvénients précités. Elle concerne un procédé de guidage d'un mobile, notamment un aéronef, dans un plan horizontal permettant de capturer et de suivre de façon précise, simple et non brusque une trajectoire définie dans ledit plan horizontal et formée de segments adjacents rectilignes et/ou en arcs de cercle.

A cet effet, selon l'invention, ledit procédé est remarquable en ce que l'on effectue de façon répétitive les opérations suivantes :

- on détermine le segment de ladite trajectoire par rapport auquel ledit mobile doit être guidé ;
- on détermine la distance xtk entre ledit mobile et la projection orthogonale dudit mobile sur le segment de guidage ainsi déterminé ;
- on détermine l'angle tkae entre la direction de déplacement effective dudit mobile et la direction de déplacement fictive qu'il présenterait s'il se trouvait audit point de projection orthogonale, le long de ladite trajectoire ;
- on calcule une valeur de commande $\Phi c$ pour l'assiette latérale du mobile à partir de la relation :

$$\Phi c = \Phi nom + ((k1 \,.xtk) + tkae).k2$$

   dans laquelle :

   . k1 et k2 représentent des coefficients caractéristiques,
   . $\Phi nom$ représente la valeur nominale correspondant à l'assiette latérale que doit présenter ledit mobile pour suivre ledit segment de guidage déterminé, et
   . le produit k1.xtk est limité entre deux valeurs prédéfinies, de préférence entre plus et moins 45° ; et

- on applique audit mobile, comme commande de l'assiette latérale, la valeur de commande Φc ainsi calculée.

Ainsi, le procédé conforme à l'invention permet à la fois la capture et le suivi de la trajectoire, et ceci aussi bien pour un segment rectiligne que pour un arc de cercle, ce qui permet d'obtenir le guidage souhaité en mettant en oeuvre une seule et même suite d'opérations, quelles que soient les phases de guidage concernées.

De plus, la valeur de commande Φc est calculée de sorte que l'angle de retour sur la trajectoire ne dépasse pas une valeur prédéterminée, de préférence 45°, en limitant à cet effet le produit k1.xtk.

La présente invention permet ainsi un guidage peu brusque et précis, même lors d'un vent important pour des segments de guidage rectilignes.

Selon l'invention, pour déterminer ledit segment de guidage, avantageusement :

a) lors de la mise en oeuvre initiale du procédé, on détermine un segment initial comme segment de guidage ; puis
b) on effectue de façon répétitive les opérations suivantes :

- on détermine un premier vecteur défini entre ledit mobile et le point final du segment de guidage actuel dans le sens de déplacement sur ladite trajectoire ;
- on détermine un second vecteur défini audit point final suivant le sens de déplacement sur la trajectoire ;
- on calcule le produit scalaire desdits premier et second vecteurs ; et
- si ledit produit scalaire est supérieur ou égal à zéro, on considère toujours ledit segment de guidage actuel comme segment de guidage, sinon on considère comme segment de guidage le segment situé en aval, dans le sens de déplacement sur la trajectoire, dudit segment de guidage actuel.

Cependant, lorsque ledit segment actuel est un segment en arc de cercle d'angle supérieur à 180°, on interrompt de façon avantageuse l'étape b) précitée jusqu'à ce que l'angle le long de l'arc entre ladite projection orthogonale et le point final dudit segment devienne inférieur à 180°.

En outre, selon l'invention, les coefficients caractéristiques k1 et k2 sont calculés avantageusement à partir des relations suivantes :

$$k1 = \frac{w}{2.\xi.V} \qquad k2 = \frac{-2.\xi.w.V}{g}$$

dans lesquelles :

- $\underline{g}$ représente l'accélération de la pesanteur,
- V représente la vitesse du mobile,
- $\xi$ représente un terme d'amortissement, et
- $\underline{w}$ représente la pulsation à la fréquence de résonance.

Bien entendu, en ce qui concerne lesdits termes $\xi$ et $\underline{w}$, on peut utiliser pour la mise en oeuvre de l'invention des valeurs déterminées par l'homme du métier à partir de la théorie et de la pratique. Toutefois, selon l'invention, pour obtenir les valeurs les plus avantageuses pour un mobile déterminé, de préférence, on effectue dans une étape préliminaire une pluralité de guidages avec des termes différents et on utilise pour la mise en oeuvre du procédé les valeurs pour lesquelles la capture et le suivi de la trajectoire sont effectués de façon optimale, par rapport à des conditions prédéfinies, préconisant par exemple une capture rapide et/ou peu brusque, ou la génération de contraintes limitées prédéfinies sur le mobile.

Par ailleurs, de façon avantageuse, pour un segment de guidage correspondant à un arc de cercle, on calcule la valeur nominale Φnom à partir de la relation :

$$tg(\Phi nom) = (V^2) / (Rj.g)$$

tg(Φnom) étant la tangente de la valeur nominale Φnom, V étant la vitesse du mobile, Rj le rayon de courbure dudit arc de cercle et $\underline{g}$ l'accélération de la pesanteur, tandis que, pour un segment de guidage rectiligne, ladite valeur nominale Φnom est considérée comme nulle.

Bien entendu, pour un arc de cercle, on peut calculer la valeur nominale Φnom qui dépend de la vitesse V du mobile sur la trajectoire, lors de chaque calcul de la valeur de commande Φc.

Toutefois, la présente invention prévoit d'autres modes de réalisation.

Ainsi, dans un mode de réalisation avantageux de l'invention, on calcule la valeur nominale Φnom une seule fois pour un segment de guidage et une vitesse du mobile considérés et on utilise la valeur nominale ainsi calculée lors de chaque calcul relatif à ce segment de guidage, tandis que, dans un autre mode de réalisation particulièrement avantageux, on calcule la valeur nominale Φnom à chaque calcul de la valeur de commande Φc et au moins lors de chaque changement de la vitesse V du mobile, en utilisant alors la nouvelle valeur de ladite vitesse V, ce qui entraîne un nombre de calculs généralement limité tout en permettant d'obtenir un résultat d'une précision suffisante.

Par ailleurs, afin que le mobile ne vienne pas de façon trop brusque, c'est-à-dire de façon trop directe, sur la trajectoire lors d'une capture, avantageusement, on applique audit mobile la valeur de commande calculée Φc de façon progressive selon une loi de variation d'au moins du second ordre.

De préférence, pour déterminer ladite valeur progressive à appliquer au mobile à partir d'une valeur de commande calculée :

- on limite ladite valeur de commande calculée ;
- on calcule la dérivée seconde par rapport au temps de ladite valeur limitée ;
- on limite ladite dérivée seconde ; et
- on effectue une double intégration par rapport au temps de ladite dérivée seconde limitée de manière à obtenir ladite valeur progressive à appliquer à la commande.

La valeur ainsi déterminée par le procédé conforme à l'invention peut être transmise à différents dispositifs utilisateurs. Bien entendu, lorsque ledit mobile est un aéronef muni d'un pilote automatique, avantageusement, on applique la valeur de commande calculée Φc, éventuellement de façon progressive, directement audit pilote automatique dudit aéronef.

La présente invention concerne également un dispositif pour la mise en oeuvre du procédé précité.

Selon l'invention, ledit dispositif est remarquable en ce qu'il comporte :

- une première unité de calcul susceptible de déterminer le segment de guidage actuel et comprenant en outre :

  . un premier calculateur susceptible de déterminer la distance xtk entre ledit mobile et la projection orthogonale dudit mobile sur le segment de guidage, et
  . un second calculateur susceptible de déterminer l'angle tkae entre la direction de déplacement effective dudit mobile et la direction de déplacement fictive qu'il présenterait s'il se trouvait audit point de projection orthogonale, le long de ladite trajectoire ; et

- une seconde unité de calcul reliée à ladite première unité de calcul, susceptible de calculer une valeur de commande Φc pour l'assiette latérale du mobile à partir de la relation :

$$\Phi c = \Phi nom + ((k1.xtk)+tkae).k2$$

dans laquelle :

  . k1 et k2 représentent des coefficients caractéristiques,
  . Φnom représente la valeur nominale correspondant à l'assiette latérale que doit présenter ledit mobile pour suivre ledit segment de guidage déterminé, et
  . le produit k1.xtk est limité entre deux valeurs prédéfinies,

la valeur de commande Φc ainsi calculée étant appliquée audit mobile comme commande de l'assiette latérale.

Ladite seconde unité de calcul comprend de façon avantageuse :

- un premier calculateur susceptible de calculer le produit k1.xtk ;
- un deuxième calculateur susceptible de limiter la valeur calculée et fournie par le premier calculateur ;
- un troisième calculateur susceptible de calculer la somme de la valeur de l'angle tkae et des résultats fournis par le deuxième calculateur ;
- un quatrième calculateur susceptible de calculer le produit entre la valeur k2 et les résultats fournis par le troisième calculateur ;

- un cinquième calculateur susceptible de calculer la valeur nominale Φnom ; et
- un calculateur central relié auxdits quatrième et cinquième calculateurs et susceptible de calculer la valeur de commande Φc de l'assiette latérale du mobile.

Par ailleurs, le dispositif conforme à l'invention peut comporter avantageusement un moyen de calcul auxiliaire permettant de déterminer, à partir de la valeur de commande calculée Φc, selon une loi de variation d'au moins du second degré, la valeur progressive à appliquer à la commande de l'assiette latérale du mobile.

Les figures du dessin annexé feront bien comprendre comment l'invention peut être réalisée. Sur ces figures, des références identiques désignent des éléments semblables.

La figure 1 est le schéma synoptique du dispositif conforme à l'invention.

La figure 2 illustre schématiquement le guidage d'un mobile conforme à l'invention par rapport à un segment rectiligne.

La figure 3 illustre schématiquement le guidage d'un mobile conforme à l'invention par rapport à un arc de cercle.

La figure 4 montre la détermination du segment de guidage à partir d'un segment rectiligne.

La figure 5 montre la détermination du segment de guidage pour une trajectoire sous forme d'un arc de cercle, dont l'angle est inférieur à 180°.

La figure 6 illustre la détermination du segment de guidage pour une trajectoire sous forme d'un arc de cercle, dont l'angle est supérieur à 180°.

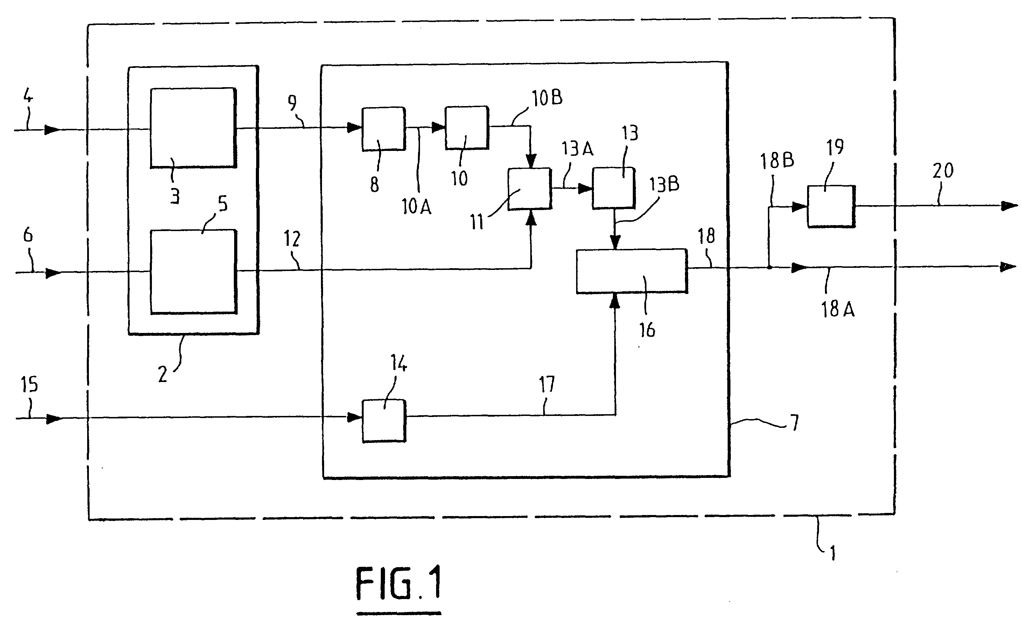

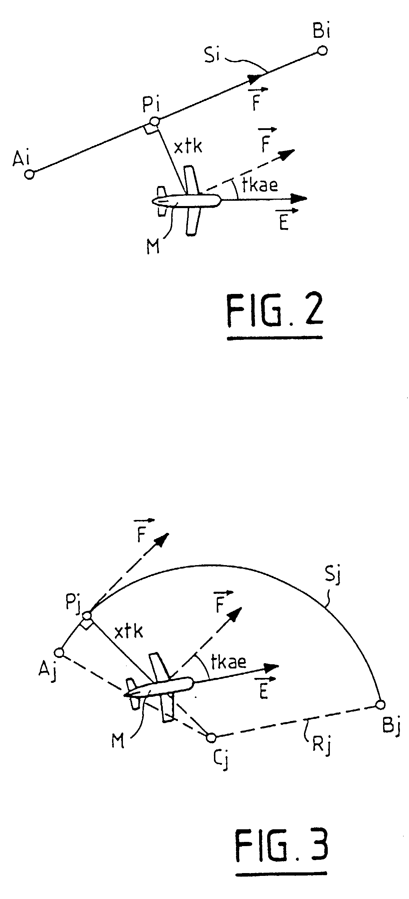

Le dispositif 1 conforme à l'invention et représenté de façon schématique sur la figure 1 est destiné à être embarqué à bord d'un mobile, représenté sous forme d'un aéronef M sur les figures 2 à 5, de manière à permettre le guidage dudit mobile dans un plan horizontal le long d'une trajectoire prédéfinie.

Dans le cadre de la présente invention, cette trajectoire prédéfinie est formée de segments rectilignes Si et d'arcs de cercle Sj raccordés ensemble, tels que montrés de façon séparée respectivement sur les figures 2 et 3.

Selon la position au début du guidage dudit mobile M par rapport à ladite trajectoire, le guidage envisagé est effectué, soit à partir des deux phases suivantes, soit uniquement à partir de la dernière desdites phases, à savoir :

- une phase de capture destinée à amener ledit mobile M sur ladite trajectoire, et
- une phase de suivi permettant de déplacer ledit mobile M situé sur ladite trajectoire le long de celle-ci.

Les méthodes connues pour effectuer un tel guidage présentent une précision peu satisfaisante et nécessitent généralement des opérations, en particulier des modes de calcul des ordres de guidage, différentes pour la capture et le suivi, de même souvent des opérations différentes selon que le segment considéré de ladite trajectoire est un segment rectiligne ou un arc de cercle de sorte que lesdites méthodes de guidage usuelles sont généralement très complexes.

La présente invention concerne un procédé de guidage très précis mis en oeuvre par ledit dispositif 1, permettant de remédier à ces inconvénients.

A cet effet, selon l'invention, pour effectuer un tel guidage :

- on détermine le segment de ladite trajectoire par rapport auquel le mobile M doit être guidé. Il s'agit donc, soit d'un segment rectiligne Si de point initial Ai et de point final Bi, tel que représenté sur la figure 2, soit d'un arc de cercle Sj, de centre Cj, de point initial Aj, de point final Bj et de rayon de courbure Rj, tel que représenté sur la figure 3 ;
- on détermine la distance xtk entre ledit mobile M et la projection orthogonale Pi ou Pj dudit mobile M sur le segment de guidage Si ou Sj déterminé précédemment ;
- on détermine l'angle tkae entre la direction de déplacement effective $\vec{E}$ dudit mobile M et la direction de déplacement fictive $\vec{F}$ qu'il présenterait s'il se trouvait audit point de projection orthogonale Pi ou Pj le long de ladite trajectoire. Pour un segment rectiligne Si, ladite direction fictive $\vec{F}$ est parallèle audit segment Si, tandis que, pour un arc de cercle Sj, elle correspond à la tangente au point Pj dudit arc de cercle Sj ;
- on calcule une valeur Φc de l'assiette latérale du mobile M à partir de la relation :

$$\Phi c = \Phi nom + ((k1.xtk)+tkae).k2 \tag{1}$$

  dans laquelle :

  . k1 et k2 représentent des coefficients caractéristiques précisés ci-dessous,
  . Φnom représente la valeur nominale correspondant à l'assiette latérale que doit présenter ledit mobile M pour suivre ledit segment de guidage déterminé, et

.   le produit k1.xtk est limité entre deux valeurs prédéfinies, de préférence entre plus et moins 45° ; et

- on applique audit mobile M comme commande de l'assiette latérale la valeur Φc ainsi calculée, de préférence après l'avoir modifiée de la manière indiquée ci-dessous.

Pour la mise en oeuvre de ce procédé, le dispositif 1 conforme à l'invention comporte en outre :

- une unité de calcul 2 susceptible de déterminer le segment de guidage actuel et comprenant :

  .   un calculateur 3 recevant des informations par l'intermédiaire d'une liaison 4 et susceptible de déterminer la distance xtk, de façon connue par l'homme du métier et non précisée dans la présente description ; et
  .   un calculateur 5 recevant des informations par l'intermédiaire d'une liaison 6 et susceptible de déterminer l'angle tkae, également de façon connue et non précisée ici ; et

- une unité de calcul 7 reliée à ladite unité de calcul 2, tel que précisé ci-dessous, et susceptible de calculer la valeur Φc de l'assiette latérale.

A cet effet, ladite unité de calcul 7 comporte :

- un calculateur 8 relié par l'intermédiaire d'une liaison 9 audit calculateur 3 et susceptible de calculer le produit k1.xtk, la distance xtk étant reçue dudit calculateur 3 et le coefficient k1 étant calculé à partir de l'expression :

$$k1 = \frac{w}{2.\xi.V}$$

dans laquelle :

  .   $\underline{w}$ est la pulsation à la fréquence de résonance,
  .   $\underline{\xi}$ est un terme d'amortissement, et
  .   V est la vitesse du mobile M ;

- un calculateur 10 relié par l'intermédiaire d'une liaison 10A audit calculateur 8 et susceptible de limiter la valeur calculée et fournie par ce calculateur 8, de préférence entre plus et moins 45° ;
- un calculateur 11 relié aux calculateurs 5 et 10 respectivement par l'intermédiaire de liaisons 12 et 10B et susceptible de calculer la somme des résultats fournis par les calculateurs 5 et 10, à savoir l'expression (k1.xtk)+tkae ;
- un calculateur 13 relié au calculateur 11 par une liaison 13A, recevant les résultats de ses traitements et susceptible de calculer l'expression ((k1.xtk)+tkae).k2, le coefficient k2 étant calculé à partir de l'expression :

$$k2 = - (2.\xi.w.V)/g$$

dans laquelle, en plus des éléments précités, $\underline{g}$ représente l'accélération de la pesanteur ;
- un calculateur 14 recevant des informations par l'intermédiaire d'une liaison 15 et susceptible de calculer la valeur nominale Φnom, tel que précisé ci-après ; et
- un calculateur central 16 relié auxdits calculateurs 13 et 14 respectivement par l'intermédiaire de liaisons 13B et 17 et susceptible de calculer la valeur Φc de commande de l'assiette latérale du mobile M au moyen de l'expression (1) précitée.

On notera que la valeur Φnom, qui correspond à l'assiette latérale que doit présenter le mobile M pour suivre un segment de guidage déterminé capturé, tel qu'indiqué précédemment :

- est considérée comme nulle, pour un segment de guidage rectiligne Si, ce qui est évident puisque le mobile doit se déplacer dans ce cas en ligne droite ; et
- est calculée à partir de l'expression :

$$tg(\Phi nom) = (V^2)/(Rj.g),$$

pour un arc de cercle Sj de rayon de courbure Rj, tg(Φnom) étant la tangente de Φnom.

Selon les conditions de fonctionnement, plusieurs modes de réalisation différents peuvent être mis en oeuvre conformément à l'invention pour calculer ladite valeur nominale Φnom.

Dans un premier mode de réalisation, le calculateur 14 calcule ladite valeur nominale Φnom lors de chaque détermination de la valeur Φc, tandis que, dans un second mode de réalisation simplifié, ledit calculateur 14 effectue le calcul une seule fois par segment de guidage pour une vitesse donnée du mobile, ce qui facilite bien entendu la mise en oeuvre du procédé conforme à l'invention et se justifie par la capacité des traitements à corriger certains écarts occasionnels.

Toutefois, une telle hypothèse de constance n'est pas toujours vérifiée en pratique. En effet, comme la vitesse est susceptible de varier au cours du guidage, l'expression précitée de la valeur nominale Φnom pour un arc de cercle Sj est susceptible elle aussi de varier.

Pour tenir compte de cette possibilité de variation, dans un troisième mode de réalisation particulièrement avantageux, on calcule la valeur nominale Φnom lors de chaque changement de la vitesse V transmise au calculateur 14 par la liaison 15 qui est reliée à cet effet à un dispositif non représenté de mesure de la vitesse du mobile M.

Le calculateur central 16 peut transmettre la valeur Φc calculée, par l'intermédiaire d'une branche 18A d'une liaison 18 dédoublée en deux branches 18A et 18B, à un dispositif utilisateur non représenté, en particulier à un pilote automatique lorsque le mobile est un aéronef muni d'un tel pilote automatique. Ce dernier dirige alors ledit aéronef suivant la valeur de l'assiette latérale qui lui a été transmise.

Le procédé et le dispositif 1 conformes à l'invention présentent de nombreux avantages, en particulier :

- le guidage effectué est très précis ;
- le dispositif 1 peut être associé à un pilote automatique d'aéronef ; et
- on utilise la même méthode, en particulier la même expression (1) de calcul de Φc, aussi bien pour la capture que pour le suivi de la trajectoire, et ceci que le segment de guidage soit un segment rectiligne Si ou un arc de cercle Sj, ce qui simplifie énormément le guidage.

Pour bien mettre en évidence la précision de la présente invention, on montre ci-après à l'exemple d'un aéronef M que l'expression (1) utilisée selon l'invention pour calculer Φc est valable à la fois pour un segment rectiligne Si et pour un arc de cercle Sj, comme indiqué précédemment.

En premier lieu, pour un segment rectiligne Si, tel que représenté sur la figure 2, l'inclinaison Φ de l'aéronef M est définie, d'après des équations connues de mécanique du vol, à partir de l'expression :

$$tg\Phi = (wa.V)/g$$

dans laquelle, en plus des éléments g et V précités, wa représente la vitesse de rotation de l'aéronef autour de son centre de virage non représenté.

Comme par hypothèse, le segment de guidage Si est rectiligne, on a l'égalité suivante :

$$wa = tkae',$$

tkae' étant la dérivée par rapport au temps de l'angle tkae précité.

On en déduit que :

$$tkae' = (g/V).tg\Phi$$

Comme l'inclinaison Φ vaut au maximum 30°, en raison des limitations imposées en particulier par le pilote automatique, on obtient l'approximation suivante :

$$tg\Phi \simeq \Phi$$

de sorte que :

$$tkae' = (\Phi.g)/V \qquad (2)$$

En outre, la dérivée xtk' par rapport au temps de la distance xtk vérifie la relation :

$$xtk' = V.sin(tkae)$$

Comme l'angle tkae est inférieur à 45°, on peut admettre l'approximation suivante :

$$sin\ tkae \simeq tkae$$

qui permet de retenir la relation :

$$xtk' = V.tkae \qquad (3)$$

A partir desdites expressions (2) et (3), on déduit le système suivant, défini selon les notations de Laplace :

$$\left[ \begin{array}{l} tkae = \dfrac{1}{p} \cdot \left( \dfrac{g}{V} \cdot \Phi \right) \\[3mm] xtk \ = \dfrac{1}{p^2} \cdot (g \cdot \Phi) \end{array} \right. \qquad (4)$$

De plus, d'après un résultat classique de mathématique, pour déterminer un paramètre $\Phi c$ à partir de deux paramètres variables xtk et tkae, il faut utiliser une loi du type :

$$\Phi c = c1.xtk + c2.tkae \qquad (5)$$

avec c1 et c2, deux coefficients caractéristiques.

Comme, de plus, on a l'égalité $\Phi c = \Phi$ en raison de l'inertie de l'aéronef, on obtient à partir du système (4) précité l'expression suivante, en notations de Laplace :

$$\Phi = c1. \frac{1}{p^2}.(g.\Phi) + c2. \frac{1}{p}.(\frac{g}{V} .\Phi)$$

qui permet d'obtenir l'équation :

$$p^2 - (c2.\frac{g}{V}).p - c1.g = 0$$

En identifiant cette dernière équation à une équation du second degré du type :

$$p^2 + 2.\xi.w.p + w^2 = 0$$

avec $\xi$ un terme d'amortissement et $\underline{w}$ la pulsation à la fréquence de résonance, on obtient les valeurs suivantes des coefficients c1 et c2 :

8

$$\left[\begin{array}{l} c1 = \dfrac{-w^2}{g} \\[2em] c2 = \dfrac{-2.\xi.w.V}{g} \end{array}\right. \qquad (6)$$

Lesdites expressions (5) et (6) permettent de retrouver l'expression (1) utilisée dans le procédé conforme à l'invention pour calculer Φc, en supposant que la valeur nominale Φnom soit nulle et que k1 = c1/c2 et k2 = c2.

En second lieu, on va vérifier cette expression (1) pour un segment de guidage correspondant à un arc de cercle Sj, tel que représenté sur la figure 3.

Si l'aéronef M est stabilisé en virage sur ledit arc de cercle Sj, alors l'expression suivante est vérifiée :

$$tg(\Phi nom) = (wnom.V)/g,$$

wnom étant la vitesse angulaire de l'aéronef M sur ledit arc de cercle de rayon Rj, qui est définie par wnom=V/Rj.

Dans la présente hypothèse, la vitesse de rotation $\underline{wa}$ de l'aéronef M s'écrit :

$$wa = wnom + tkae'$$

L'expression tgΦ = (wa.V)/g s'écrit alors :

$$tg\Phi = \frac{wnom.V}{g} + \frac{tkae'.V}{g} = tg(\Phi nom) + \frac{tkae'.V}{g}$$

Comme, de plus, tgΦ ≃ Φ et tg(Φnom) ≃ Φnom, en reprenant les mêmes hypothèses que précédemment, on obtient la relation suivante :

$$tkae' = (g/V).(\Phi-\Phi nom)$$

qui permet de déduire, en tenant compte de l'expression précédente (3) qui est toujours vérifiée, le système suivant, en notations de Laplace :

$$\left[\begin{array}{l} tkae = \dfrac{1}{p} . (\dfrac{g}{V}.(\Phi-\Phi nom)) \\[2em] xtk = \dfrac{1}{p^2} . (g.(\Phi-\Phi nom)) \end{array}\right.$$

système à partir duquel on peut finalement déduire :

- en reprenant les mêmes hypothèses que pour le segment rectiligne Si ; et
- en posant, Φc = (Φ - Φnom),
  l'expression :

$$\Phi c = c1.xtk + c2.tkae + \Phi nom \qquad (7)$$

avec $c_1 = (-w^2)/g$

et $c_2 = (-2.\xi.w.V)/g$

Ainsi, cette formule (7) de calcul de $\Phi_c$ s'applique aussi bien à un segment rectiligne Si qu'à un arc de cercle Sj.

Ladite formule (7) peut s'écrire sous la forme :

$$\Phi_c = \Phi_{nom} + c_2.(tkae + \frac{c_1}{c_2}.xtk)$$

et permet de retrouver l'expression (1), en posant $k_1 = c_1/c_2$ et $k_2 = c_2$.

On notera par ailleurs que, pour les termes $\xi$ et $\underline{w}$, on peut utiliser des valeurs préconisées par la théorie et la pratique.

Toutefois, afin d'obtenir les valeurs les plus avantageuses pour un mobile déterminé, ainsi que pour des conditions de guidage déterminées, selon l'invention, on effectue dans une étape préliminaire une pluralité de guidages avec des termes différents et on utilise pour la mise en oeuvre du procédé les valeurs pour lesquelles la capture et le suivi de la trajectoire sont effectués de façon optimale, par rapport à ces conditions prédéfinies. Cette étape préliminaire peut être réalisée sous forme de simulations ou sous forme de guidages effectifs, par exemple dans des conditions de vol réelles pour un aéronef.

Afin d'éviter des changements de direction trop brusques de l'aéronef M, qui sont désavantageux pour le confort des passagers et qui entraînent des contraintes élevées sur ledit aéronef M, on applique aux organes de commande de ce dernier la valeur calculée $\Phi_c$ de l'assiette latérale, de façon progressive, et plus précisément suivant une loi de variation au moins du second degré.

A cet effet, le dispositif 1 conforme à l'invention comporte un moyen de calcul auxiliaire 19 relié à la branche 18B de la liaison 18 à la sortie du calculateur central 14 et destiné à déterminer à partir de la valeur calculée $\Phi_c$ la valeur progressive à appliquer à la commande de l'assiette latérale du mobile M.

Selon l'invention, pour déterminer ladite valeur progressive à appliquer, ledit calculateur 19 effectue les opérations suivantes :

- **-** il limite la valeur $\Phi_c$ calculée ;
- **-** il calcule la dérivée seconde par rapport au temps de ladite valeur limitée ;
- **-** il limite ladite dérivée seconde ; et
- **-** il effectue une double intégration par rapport au temps de ladite dérivée seconde limitée de manière à obtenir ladite valeur progressive croissant au cours du temps.

Ledit moyen de calcul auxiliaire 19 peut transmettre cette valeur progressive par l'intermédiaire d'une liaison 20 à un dispositif utilisateur, en particulier au pilote automatique dans le cas d'un aéronef muni d'un tel pilote automatique.

Le dispositif 1 conforme à l'invention comporte également un moyen non représenté intégré par exemple dans l'unité de calcul 2 et permettant de déterminer un changement de segment de guidage sur ladite trajectoire prédéfinie, c'est-à-dire un changement du segment à prendre en compte pour la mise en oeuvre du guidage.

A cet effet, selon l'invention, on calcule le produit scalaire de deux vecteurs $\vec{V1}$ et $\vec{V2}$ définis ci-dessous et on considère qu'un changement de segment de guidage doit être effectué lorsque ce produit scalaire devient négatif. Dans un tel cas, on considère comme segment de guidage le segment situé en aval, dans le sens de déplacement sur la trajectoire, du segment pour lequel ledit produit scalaire est devenu négatif.

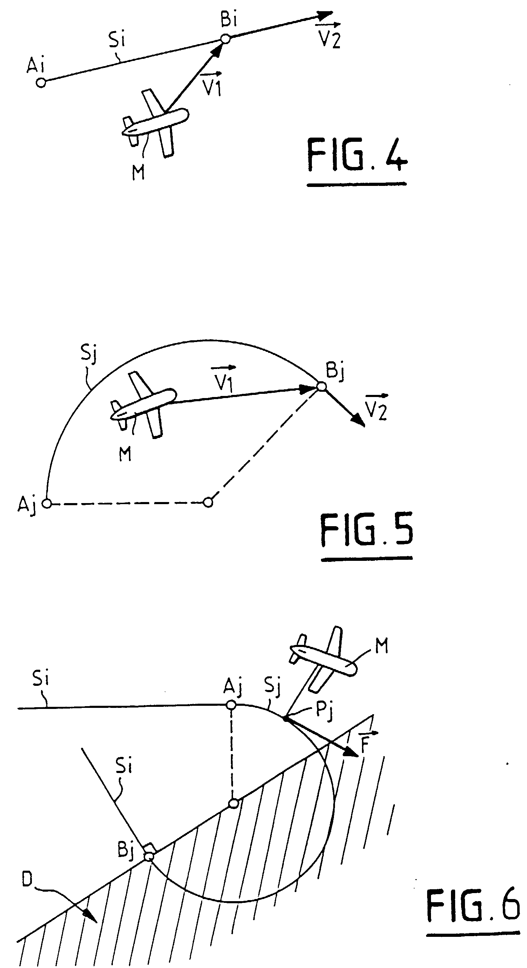

Selon l'invention, le vecteur $\vec{V1}$ est formé entre ledit mobile M et le point final Bi ou Bj du segment de guidage considéré Si ou Sj et le vecteur $\vec{V2}$ est formé audit point final Bi ou Bj dans le sens de déplacement sur la trajectoire à ce point Bi ou Bj, comme représenté sur les figures 4 et 5 respectivement pour un segment rectiligne Si et un arc de cercle Sj.

De plus, selon l'invention, lorsque ledit segment de guidage est un segment en arc de cercle Sj d'angle supérieur à 180°, tel que représenté sur la figure 6, on interrompt le calcul dudit produit scalaire et donc la méthode précitée jusqu'à ce que l'angle le long de l'arc entre la projection orthogonale Pj du mobile M et le point final Bj dudit segment Sj devienne inférieur à 180°.

Par conséquent, dans l'exemple représenté sur la figure 6, on met en oeuvre la méthode précitée, pour l'arc de cercle Sj, uniquement lorsque le mobile M est situé dans la partie hachurée D.

L'exemple de réalisation non limitatif décrit précédemment permet de bien mettre en évidence les nombreux avantages de la présente invention.

Bien entendu, dans le cadre de la présente invention, le procédé précité peut être mis en oeuvre par un seul calculateur ou par toute autre architecture de calcul appropriée.

**Revendications**

1. Procédé de guidage d'un mobile (M), notamment un aéronef, dans un plan horizontal pour capturer et suivre une trajectoire définie dans ledit plan horizontal et formée de segments adjacents rectilignes (Si) et/ou en arcs de cercle (Sj),
caractérisé en ce que l'on effectue de façon répétitive les opérations suivantes :

   - on détermine le segment (Si, Sj) de ladite trajectoire par rapport auquel ledit mobile (M) doit être guidé ;
   - on détermine la distance xtk entre ledit mobile (M) et la projection orthogonale (Pi, Pj) dudit mobile (M) sur le segment de guidage (Si, Sj) ainsi déterminé ;
   - on détermine l'angle tkae entre la direction de déplacement effective ($\vec{E}$) dudit mobile (M) et la direction de déplacement fictive ($\vec{F}$) qu'il présenterait s'il se trouvait audit point de projection orthogonale (Pi, Pj), le long de ladite trajectoire ;
   - on calcule une valeur de commande Φc pour l'assiette latérale du mobile à partir de la relation

$$\Phi c = \Phi nom + ((k1.xtk)+tkae).k2$$

   dans laquelle :

   . k1 et k2 représentent des coefficients caractéristiques,
   . Φnom représente la valeur nominale correspondant à l'assiette latérale que doit présenter ledit mobile (M) pour suivre ledit segment de guidage déterminé, et
   . le produit k1.xtk est limité entre deux valeurs prédéfinies ; et

   - on applique audit mobile (M), comme commande de l'assiette latérale, la valeur de commande Φc ainsi calculée.

2. Procédé selon la revendication 1,
caractérisé en ce que, pour déterminer ledit segment de guidage (Si, Sj) :

   a) lors de la mise en oeuvre initiale du procédé, on détermine un segment initial comme segment de guidage ; puis
   b) on effectue de façon répétitive les opérations suivantes :

   - on détermine un premier vecteur ($\vec{V1}$) défini entre ledit mobile (M) et le point final (Bi, Bj) du segment de guidage actuel (Si, Sj) dans le sens de déplacement sur ladite trajectoire ;
   - on détermine un second vecteur ($\vec{V2}$) défini audit point final (Bi, Bj) suivant le sens de déplacement sur la trajectoire ;
   - on calcule le produit scalaire desdits premier et second vecteurs ($\vec{V1}$, $\vec{V2}$) ; et
   - si ledit produit scalaire est supérieur ou égal à zéro, on considère toujours ledit segment de guidage actuel comme segment de guidage, sinon on considère comme segment de guidage le segment situé en aval, dans le sens de déplacement sur la trajectoire, dudit segment de guidage actuel.

3. Procédé selon la revendication 2,
caractérisé en ce que, lorsque ledit segment actuel est un segment en arc de cercle (Sj) d'angle supérieur à 180°, on interrompt l'étape b) jusqu'à ce que l'angle le long de l'arc entre ladite projection orthogonale (Pj) et le point final (Bj) dudit segment (Sj) devienne inférieur à 180°.

4. Procédé selon l'une quelconque des revendications précédentes,
caractérisé en ce que les coefficients caractéristiques k1 et k2 sont calculés à partir des relations suivantes :

$$\left[ \quad k1 = \frac{w}{2.\xi.V} \qquad k2 = \frac{-2.\xi.w.V}{g} \right.$$

dans lesquelles :

- $g$ représente l'accélération de la pesanteur,
- V représente la vitesse du mobile (M),
- $\xi$ représente un terme d'amortissement, et
- $w$ représente la pulsation à la fréquence de résonance.

5. Procédé selon la revendication 4,
caractérisé en ce que, pour préciser les valeurs des termes $\xi$ et $w$, on effectue dans une étape préliminaire une pluralité de guidages avec des termes différents et on utilise pour la mise en oeuvre du procédé les valeurs pour lesquelles la capture et le suivi de la trajectoire sont effectués de façon optimale, par rapport à des conditions prédéfinies.

6. Procédé selon l'une quelconque des revendications précédentes,
caractérisé en ce que, pour un segment de guidage correspondant à un arc de cercle (Sj), on calcule la valeur nominale Φnom à partir de la relation :

$$tg(\Phi nom) = (V^2)/(Rj.g)$$

tg(Φnom) étant la tangente de la valeur nominale Φnom, V étant la vitesse du mobile (M), Rj le rayon de courbure dudit arc de cercle (Sj) et $g$ l'accélération de la pesanteur, et en ce que, pour un segment de guidage rectiligne (Si), ladite valeur nominale Φnom est considérée comme nulle.

7. Procédé selon la revendication 6,
caractérisé en ce que l'on calcule la valeur nominale Φnom une seule fois pour un segment de guidage et une vitesse V du mobile (M) considérés et en ce que l'on utilise la valeur nominale ainsi calculée lors de chaque calcul relatif à ce segment de guidage.

8. Procédé selon la revendication 6,
caractérisé en ce que l'on calcule la valeur nominale Φnom à chaque calcul de la valeur de commande et au moins lors de chaque changement de la vitesse V du mobile (M), en utilisant alors la nouvelle valeur de ladite vitesse V.

9. Procédé selon l'une quelconque des revendications précédentes,
caractérisé en ce que l'on applique au mobile (M) la valeur de commande calculée Φc de façon progressive, selon une loi de variation d'au moins du second ordre.

10. Procédé selon la revendication 9,
caractérisé en ce que, pour déterminer la valeur progressive à appliquer audit mobile à partir d'une valeur de commande calculée :

- on limite ladite valeur de commande calculée ;
- on calcule la dérivée seconde par rapport au temps de ladite valeur limitée ;
- on limite ladite dérivée seconde ; et
- on effectue une double intégration par rapport au temps de ladite dérivée seconde limitée de manière à obtenir ladite valeur progressive à appliquer à la commande.

11. Procédé selon l'une quelconque des revendications précédentes, ledit mobile étant un aéronef (M) muni d'un pilote automatique,
caractérisé en ce que l'on applique la valeur de commande calculée Φc, éventuellement de façon progressive, directement audit pilote automatique dudit aéronef.

12. Dispositif pour la mise en oeuvre du procédé spécifié sous l'une quelconque des revendications 1 à 11,
caractérisé en ce qu'il comporte :

- une première unité de calcul (2) susceptible de déterminer le segment de guidage actuel et comprenant en outre :

. un premier calculateur (3) susceptible de déterminer la distance xtk entre ledit mobile (M) et la projection orthogonale (Pi, Pj) dudit mobile (M) sur le segment de guidage (Si, Sj), et

. un second calculateur (5) susceptible de déterminer l'angle tkae entre la direction de déplacement effective ($\vec{E}$) dudit mobile (M) et la direction de déplacement fictive ($\vec{F}$) qu'il présenterait s'il se trouvait audit point de projection orthogonale (Pi, Pj), le long de ladite trajectoire ; et

- une seconde unité de calcul (7) reliée à ladite première unité de calcul (2), susceptible de calculer une valeur de commande Φc pour l'assiette latérale du mobile à partir de la relation :

$$\Phi c = \Phi nom + ((k1.xtk)+tkae).k2$$

dans laquelle :

. k1 et k2 représentent des coefficients caractéristiques,

. Φnom représente la valeur nominale correspondant à l'assiette latérale que doit présenter ledit mobile (M) pour suivre ledit segment de guidage déterminé, et

. le produit k1.xtk est limité entre deux valeurs prédéfinies,

la valeur de commande Φc ainsi calculée étant appliquée audit mobile (M) comme commande de l'assiette latérale.

**13.** Dispositif selon la revendication 12,
caractérisé en ce que ladite seconde unité de calcul (7) comporte :

- un premier calculateur (8) susceptible de calculer le produit k1.xtk ;
- un deuxième calculateur (10) susceptible de limiter la valeur calculée et fournie par le premier calculateur (8) ;
- un troisième calculateur (11) susceptible de calculer la somme de la valeur de l'angle tkae et des résultats fournis par le deuxième calculateur (10);
- un quatrième calculateur (13) susceptible de calculer le produit entre la valeur k2 et les résultats fournis par le troisième calculateur (11) ;
- un cinquième calculateur (14) susceptible de calculer la valeur nominale Φnom; et
- un calculateur central (16) relié auxdits quatrième et cinquième calculateurs (13, 14) et susceptible de calculer la valeur de commande Φc de l'assiette latérale du mobile (M).

**14.** Dispositif selon l'une quelconque des revendications 12 ou 13, pour la mise en oeuvre du procédé spécifié sous l'une des revendications 9 ou 10,
caractérisé en ce qu'il comporte un moyen de calcul auxiliaire (19) permettant de déterminer, à partir de la valeur de commande calculée Φc, selon une loi de variation d'au moins du second degré, la valeur progressive à appliquer à la commande de l'assiette latérale du mobile (M).

**15.** Dispositif pour la mise en oeuvre du procédé spécifié sous l'une quelconque des revendications 1 à 11,
caractérisé en ce qu'il est réalisé sous forme d'une architecture de calcul appropriée.

**Patentansprüche**

**1.** Verfahren zur Führung eines mobilen Objekts (M), insbesondere eines Flugzeug, in einer horizontalen Ebene, um eine in der genannten horizontalen Ebene definierte Flugbahn, die aus geradlinigen aneinandergrenzenden Segmenten (Si) und/oder Kreisbögen (Sj) besteht, zu erreichen und ihr zu folgen,
dadurch gekennzeichnet, daß wiederholt folgende Operationen ausgeführt werden:

- man ermittelt das Segment (Si, Sj) der genannten Flugbahn, im Verhältnis zu dem das genannte mobile Objekt (M) geführt werden soll;
- man ermittelt den Abstand xtk zwischen dem genannten mobilen Objekt (M) und der Orthogonalprojektion (Pi, Pj) des genannten mobilen Objekts (M) auf dem so ermittelten Führungssegment (Si, Sj);
- man ermittelt den Winkel tkae zwischen der tatsächlichen Bewegungsrichtung ($\vec{E}$) und der fiktiven Bewegungsrichtung ($\vec{F}$) des genannten mobilen Objekts (M), die es hätte, wenn es sich am genannten Orthogonalprojektionspunkt (Pi, Pj) entlang der genannten Flugbahn befinden würde;
- man berechnet einen Steuerungswert Φc für die Seitentrimmung des mobilen Objekts (M) ausgehend von der Relation:

$$\Phi c = \Phi nom + ((k1.xtk)+tkae).k2,$$

in der

- k1 und k2 charakteristische Koeffizienten darstellen,
- Φnom den Nennwert darstellt, der der Seitentrimmung entspricht, die das genannte mobile Objekt (M) aufweisen muß, um dem genannten ermittelten Führungssegment zu folgen, und
- das Produkt kl.xtk zwischen zwei vorher festgelegten Werten begrenzt ist; und

- man wendet auf das genannte mobile Objekt (M) als Steuerung der Seitentrimmung den auf diese Weise berechneten Steuerungswert Φc an.

2. Verfahren gemäß Anspruch 1,
dadurch gekennzeichnet, daß zur Ermittlung des genannten Führungssegments (Si, Sj)

a) bei der ersten Anwendung des Verfahrens ein Ausgangssegment als Führungssegment ermittelt wird; dann
b) wiederholt folgende Operationen durchgeführt werden:

- man ermittelt einen ersten, zwischen dem genannten mobilen Objekt (M) und dem Endpunkt (Bi, Bj) des aktuellen Führungssegments (Si, Sj) in der Bewegungsrichtung auf der genannten Flugbahn definierten Vektor ($\overrightarrow{V1}$);
- man ermittelt einen zweiten, am genannten Endpunkt (Bi, Bj) entsprechend der Bewegungsrichtung auf der Flugbahn definierten Vektor ($\overrightarrow{V1}$);
- man berechnet das Skalarprodukt des genannten ersten und zweiten Vektors ($\overrightarrow{V1}$, $\overrightarrow{V2}$); und
- wenn das Skalarprodukt größer als oder gleich Null ist, betrachtet man weiterhin das genannte aktuelle Führungssegment als Führungssegment, anderenfalls betrachtet man als Führungssegment das Segment, das in Bewegungsrichtung auf der Flugbahn hinter dem genannten aktuellen Führungssegment liegt.

3. Verfahren gemäß Anspruch 2,
dadurch gekennzeichnet, daß, wenn das genannte aktuelle Segment ein Kreisbogensegment (Sj) mit einem Winkel über 180° ist, die Stufe b) unterbrochen wird, bis der Winkel entlang dem Bogen zwischen der genannten Orthogonalprojektion (Pj) und dem Endpunkt (Bj) des genannten Segments (Sj) weniger als 180° beträgt.

4. Verfahren gemäß einem beliebigen der vorstehenden Ansprüche,
dadurch gekennzeichnet, daß die charakteristischen Koeffizienten k1 und k2 ausgehend von folgenden Relationen berechnet werden:

$$k1 = \frac{w}{2\cdot\xi\cdot V} \qquad\qquad k2 = \frac{-2\cdot\xi\cdot w\cdot V}{g}$$

in denen:

- g die Gravitationsbeschleunigung darstellt,
- V die Geschwindigkeit des mobilen Objekts (M) darstellt,
- ξ einen Dämpfungsterm darstellt und
- w das Pulsieren bei Resonanzfrequenz darstellt.

5. Verfahren gemäß Anspruch 4,
dadurch gekennzeichnet, daß zur Präzisierung der Terme ξ und w in einer Vorstufe eine Vielzahl von Führungen mit unterschiedlichen Termen durchgeführt wird, und man für die Anwendung des Verfahrens die Werte verwendet, für die das Erreichen und das Folgen der Flugbahn im Verhältnis zu vorgegebenen Bedingungen optimal erfolgen.

**6.** Verfahren gemäß einem beliebigen der vorstehenden Ansprüche,
dadurch gekennzeichnet, daß für ein Führungssegment, das einem Kreisbogen (Sj) entspricht, der Nennwert Φnom ausgehend von der Relation

$$Tg(\Phi nom) = (V^2)/(Rj.g)$$

berechnet wird,
wobei tg(Φnom) der Tangens des Nennwerts Φnom, V die Geschwindigkeit des mobilen Objekts (M), Rj der Krümmungsradius des genannten Kreisbogens (Sj) und g die Gravitationsbeschleunigung ist, und dadurch, daß bei einem geradlinigen Führungssegment (Si) der genannte Nennwert Φnom als Null angesehen wird.

**7.** Verfahren gemäß Anspruch 6,
dadurch gekennzeichnet, daß man den Nennwert Φnom ein einziges Mal für ein betrachtetes Führungssegment und eine betrachtete Geschwindigkeit V des mobilen Objekts (M) berechnet, und dadurch, daß man den so berechneten Nennwert bei jeder Berechnung zu diesem Führungssegment verwendet.

**8.** Verfahren gemäß Anspruch 6,
dadurch gekennzeichnet, daß der Nennwert Φnom bei jeder Berechnung des Steuerungswertes und mindestens bei jeder Änderung der Geschwindigkeit V des mobilen Objekts (M) berechnet wird, wobei dann der neue Wert der genannten Geschwindigkeit V Verwendung findet.

**9.** Verfahren gemäß einem beliebigen der vorstehenden Ansprüche,
dadurch gekennzeichnet, daß auf das genannte mobile Objekt (M) der berechnete Steuerungswert Φc progressiv nach einem Variationsgesetz mindestens zweiter Ordnung angewandt wird.

**10.** Verfahren gemäß Anspruch 9,
dadurch gekennzeichnet, daß zur Ermittlung des progressiven, auf das genannte mobile Objekt anzuwendenden Wertes ausgehend von einem berechneten Steuerungswert

- der genannte berechnete Steuerungswert begrenzt wird;
- die zweite Ableitung des genannten begrenzten Wertes nach der Zeit berechnet wird;
- die genannte zweite Ableitung begrenzt wird; und
- eine doppelte Integration der genannten begrenzten zweiten Ableitung nach der Zeit durchgeführt wird, so daß man den genannten auf die Steuerung anzuwendenden progressiven Wert erhält.

**11.** Verfahren gemäß eine beliebigen der vorstehenden Ansprüche, wobei das genannte mobile Objekt ein mit einem Autopiloten ausgerüstetes Flugzeug (M) ist,
dadurch gekennzeichnet, daß der berechnete Steuerungswert Φc eventuell progressiv direkt auf den genannten Autopiloten des genannten Flugzeugs angewandt wird.

**12.** Vorrichtung zur Anwendung des in einem beliebigen der Ansprüche 1 bis 11 spezifizierten Verfahrens,
dadurch gekennzeichnet, daß sie folgendes umfaßt:

- eine erste Recheneinheit (2), die das aktuelle Führungssegment ermitteln kann und außerdem folgendes umfaßt:

  . einen ersten Rechner (3), der den Abstand xtk zwischen dem genannten mobilen Objekt (M) und der Orthogonalprojektion (Pi, Pj) des genannten mobilen Objekts (M) auf dem Führungssegment (Si, Sj) ermitteln kann, und
  . einen zweiten Rechner (5), der den Winkel tkae zwischen der tatsächlichen Bewegungsrichtung ($\vec{E}$) des mobilen Objekts (M) und der fiktiven Bewegungsrichtung ($\vec{F}$), die es entlang der Flugbahn aufweisen würde, wenn es sich am genannten Orthogonalprojektionspunkt (Pi, Pj) befände; und

- eine mit der genannten ersten Recheneinheit (2) verbundene zweite Recheneinheit (7), die einen Steuerungswert Φc für die Seitentrimmung des mobilen Objekts ausgehend von der Relation

$$\Phi c = \Phi nom + ((k1.xtk) + tkae).k2$$

berechnen kann, wobei

. k1 und k2 charakteristische Koeffizienten darstellen,
. $\Phi nom$ den Nennwert darstellt, der der Seitentrimmung entspricht, die das genannte mobile Objekt (M) aufweisen muß, um dem genannten ermittelten Führungssegment zu folgen, und
. das Produkt k1.xtk zwischen zwei vorher festgelegten Werten begrenzt ist;

wobei der so berechnete Steuerungswert $\Phi c$ als Steuerung der Seitentrimmung auf das genannte mobile Objekt (M) angewandt wird.

13. Vorrichtung gemäß Anspruch 12,
dadurch gekennzeichnet, daß die genannte zweite Recheneinheit (7) folgendes umfaßt:

- einen ersten Rechner (8), der das Produkt k1.xtk berechnen kann;
- einen zweiten Rechner (10), der den berechneten, vom ersten Rechner (8) gelieferten Wert begrenzen kann;
- einen dritten Rechner (11), der die Summe aus dem Winkelwert tkae und den vom zweiten Rechner (10) gelieferten Ergebnissen berechnen kann;
- einen vierten Rechner (13), der das Produkt aus dem Wert k2 und den vom dritten Rechner (11) gelieferten Ergebnissen berechnen kann;
- einen fünften Rechner (14), der den Nennwert $\Phi nom$ berechnen kann; und
- einen Zentralrechner (16), der mit dem genannten vierten und fünften Rechner (13, 14) verbunden ist und den Steuerungswert $\Phi c$ der Seitentrimmung des mobilen Objekts (M) berechnen kann.

14. Vorrichtung gemäß einem beliebigen der Ansprüche 12 oder 13 zur Anwendung des in einem der Ansprüche 9 oder 10 spezifizierten Verfahrens,
dadurch gekennzeichnet, daß es ein Rechenhilfsmittel (19) umfaßt, das es gestattet, ausgehend vom berechneten Steuerungswert $\Phi c$ nach einem Variationsgesetz mindestens zweiter Ordnung den auf die Steuerung der Seitentrimmung des mobilen Objekts (M) anzuwendenden progressiven Wert zu ermitteln.

15. Vorrichtung zur Anwendung des in einem der Ansprüche 1 bis 11 spezifizierten Verfahrens,
dadurch gekennzeichnet, daß es in Form einer geeigneten Rechenarchitektur realisiert wird.

**Claims**

1. Process for guiding a mobile craft (M), especially an aircraft, in a horizontal plane in order to capture and follow a trajectory defined in the said horizontal plane and formed of straight (Si) and/or circular arc-shaped (Sj) adjacent segments,
characterized in that the following operations are performed repetitively:

- the segment (Si, Sj) of the said trajectory with respect to which the said mobile craft (M) is to be guided is determined;
- the distance xtk is determined between the said mobile craft (M) and the orthogonal projection (Pi, Pj) of the said mobile craft (M) on the guidance segment (Si, Sj) thus determined;
- the angle tkae is determined between the actual direction of travel ($\vec{E}$) of the said mobile craft (M) and the fictitious direction of travel ($\vec{F}$) which it would have if it were located at the said point of orthogonal projection (Pi, Pj), along the said trajectory;
- a control value $\Phi c$ is computed for the lateral attitude of the mobile craft from the relation

$$\Phi c = \Phi nom + ((k1.xtk)+tkae).k2$$

in which:

• k1 and k2 represent characteristic coefficients,

• Φnom represents the nominal value corresponding to the lateral attitude which the said mobile craft (M) is required to have in order to follow the said determined guidance segment, and
• the product k1.xtk is restricted between two predefined values; and

- the control value Φc thus computed is applied to the said mobile craft (M) as lateral attitude control.

**2.** Process according to Claim 1,
characterized in that, in order to determine the said guidance segment (Si, Sj):

a) upon initial deployment of the process, an initial segment is determined as guidance segment; then
b) the following operations are performed repetitively:

- a first vector ($\overrightarrow{V1}$) is determined defined between the said mobile craft (M) and the final point (Bi, Bj) of the current guidance segment (Si, Sj) in the direction of travel over the said trajectory
- a second vector ($\overrightarrow{V2}$) is determined, defined at the said final point (Bi, Bj) along the direction of travel over the trajectory;
- the scalar product of the said first and second vectors ($\overrightarrow{V1}$, $\overrightarrow{V2}$) is computed; and
- if the said scalar product is greater than or equal to zero, the said current guidance segment is still regarded as guidance segment, otherwise the segment situated downstream, in the direction of travel over the trajectory, of the said current guidance segment is regarded as guidance segment.

**3.** Process according to Claim 2,
characterized in that, when the said current segment is a circular arc-shaped segment (Sj) of angle greater than 180°, step b) is interrupted until the angle along the arc between the said orthogonal projection (Pj) and the final point (Bj) of the said segment (Sj) becomes less than 180°.

**4.** Process according to any one of the preceding claims,
characterized in that the characteristic coefficients kl and k2 are computed from the following relations:

$$\left[ \quad k1 \;=\; \frac{w}{2.\xi.V} \qquad\qquad k2 \;=\; \frac{-2.\xi.w.V}{g} \right.$$

in which:

- g represents the acceleration due to gravity,
- V represents the speed of the mobile craft (M),
- ξ represents a damping term, and
- w represents the pulsatance at the resonant frequency.

**5.** Process according to Claim 4,
characterized in that, in order to specify the values of the terms ξ and w, in a preliminary step, a plurality of guidances with different terms are performed and the values for which capture and following of the trajectory are performed optimally, with respect to predefined conditions, are used for the deployment of the process.

**6.** Process according to any one of the preceding claims,
characterized in that, for a guidance segment corresponding to a circular arc (Sj), the nominal value Φnom is computed from the relation:

$$\tan(\Phi nom) = (V^2)/(Rj.g)$$

tan(Φnom) being the tangent of the nominal value Φnom, V being the speed of the mobile craft (M), Rj the radius of curvature of the said circular arc (Sj) and g the acceleration due to gravity, and in that, for a straight guidance segment (Si), the said nominal value Φnom is regarded as zero.

**7.** Process according to Claim 6,
characterized in that the nominal value Φnom is computed only once for a relevant guidance segment and relevant speed V of the mobile craft (M) and in that the nominal value thus computed is used during each computation relating to this guidance segment.

**8.** Process according to Claim 6,
characterized in that the nominal value Φnom is computed with each computation of the control value and at least during each change in the speed V of the mobile craft (M), thus using the new value of the said speed V.

**9.** Process according to any one of the preceding claims,
characterized in that the computed control value Φc is applied to the mobile craft (M) progressively, according to an at least second order law of variation.

**10.** Process according to Claim 9,
characterized in that, in order to determine the progressive value to be applied to the said mobile craft on the basis of a computed control value:

- the said computed control value is restricted;
- the second derivative with respect to time of the said restricted value is computed;
- the said second derivative is restricted; and
- a double integration with respect to time of the said restricted second derivative is performed so as to obtain the said progressive value to be applied to the control.

**11.** Process according to any one of the preceding claims, the said mobile craft being an aircraft (M) furnished with an automatic pilot,
characterized in that the computed control value Φc is applied, possibly progressively, directly to the said automatic pilot of the said aircraft.

**12.** Device for deploying the process set forth in any one of Claims 1 to 11,
characterized in that it includes:

- a first computing unit (2) capable of determining the current guidance segment and furthermore comprising:

  • a first computer (3) capable of determining the distance xtk, between the said mobile craft (M) and the orthogonal projection (Pi, Pj) of the said mobile craft (M) onto the guidance segment (Si, Sj), and
  • a second computer (5) capable of determining the angle tkae between the actual direction of travel ($\vec{E}$) of the said mobile craft (M) and the fictitious direction of travel ($\vec{F}$) which it would exhibit if it were at the said point of orthogonal projection (Pi, Pj), along the said trajectory; and

- a second computing unit (7) connected to the said first computing unit (2), capable of computing a control value Φc for the lateral attitude of the mobile craft from the following relation:

$$\Phi c = \Phi nom + ((k1.xtk) + tkae).k2$$

in which:

. k1 and k2 represent characteristic coefficients,
. Φnom represents the nominal value corresponding to the lateral attitude which the said mobile craft (M) must exhibit in order to follow the said determined guidance segment, and
. the product k1.xtk is restricted between two predefined values,

the control value Φc thus computed being applied to the said mobile craft (M) as lateral attitude control.

**13.** Device according to Claim 12,
characterized in that the said second computing unit (7) includes:

- a first computer (8) capable of computing the product k1.xtk;
- a second computer (10) capable of restricting the computed value delivered by the first computer (8);
- a third computer (11) capable of computing the sum of the value of the angle tkae and of the results delivered by the second computer (10);
- a fourth computer (13) capable of computing the product between the value k2 and the results delivered by the third computer (11);
- a fifth computer (14) capable of computing the nominal value Φnom; and
- a central computer (16) connected to the said fourth and fifth computers (13, 14) and capable of computing the control value Φc of the lateral attitude of the mobile craft (M).

14. Device according to either one of Claims 12 or 13, for the deployment of the process set forth in one of Claims 9 or 10,
characterized in that it includes an auxiliary computing means (19) making it possible to determine, from the computed control value Φc, according to an at least second degree law of variation, the progressive value to be applied to the control of the lateral attitude of the mobile craft (M).

15. Device for deploying the process set forth in any one of Claims 1 to 11,
characterized in that it is embodied in the form of a suitable computing architecture.

FIG.1

EP 0 762 252 B1

## FIG. 2

## FIG. 3

FIG.4

FIG.5

FIG.6